# EUROPEAN PATENT SPECIFICATION

(11) **EP 0 743 369 B1**
(45) Date of publication and mention of the grant of the patent: **19.09.2001**
(21) Application number: 96105877.3
(22) Date of filing: 15.04.1996
(51) Int. Cl.: C21D 1/09

(54) **Surface processing method for a steel member and surface processed steel member**
Verfahren zur Oberflächenbehandlung von Bauteilen aus Stahl und oberflächenbehandelte Bauteile aus Stahl
Procédé de traitement de surface de pièces en acier et pièces en acier traitées en surface

(30) Priority: 17.04.1995 JP 9120295; 07.12.1995 JP 34516095
(43) Date of publication of application: 20.11.1996
(73) Proprietor: AISIN AW CO., LTD., Anjo-shi Aichi-ken (JP)
(72) Inventor: Maruki, Michio, Anjo-shi, Aichi-ken, 444-11 (JP); Taniguchi, Takao, Anjo-shi, Aichi-ken, 444-11 (JP); Ohbayashi, Kouji, Anjo-shi, Aichi-ken, 444-11 (JP); Watanabe, Yoshimi, Anjo-shi, Aichi-ken, 444-11 (JP); Momiyama, Naohisa, Anjo-shi, Aichi-ken, 444-11 (JP)
(74) Representative: VOSSIUS & PARTNER

(56) References cited:
- FR-A- 2 173 303
- GB-A- 1 404 865
- US-A- 3 773 565
- PATENT ABSTRACTS OF JAPAN vol. 014, no. 017 (C-675), 16 January 1990 & JP-A-01 259118 (TOYOTA MOTOR CORP), 16 October 1989,
- HÄRTEREI TECHNISCHE MITTEILUNGEN, vol. 27, no. 2, 1972, MÜNCHEN DE, pages 85-91, XP002009784 W. HILLER ET AL. : "Neue Möglichkeiten ....."
- THIN SOLID FILMS, vol. 84, no. 4, October 1981, LAUSANNE CH, pages 341-346, XP002009785 J. E. JENKINS: "Surface modification ....."

## Description

This invention relates to a surface processing method for a steel member accompanied with local melting of the surface of the steel member and to a surface processed steel member having a locally melted and solidified surface layer.

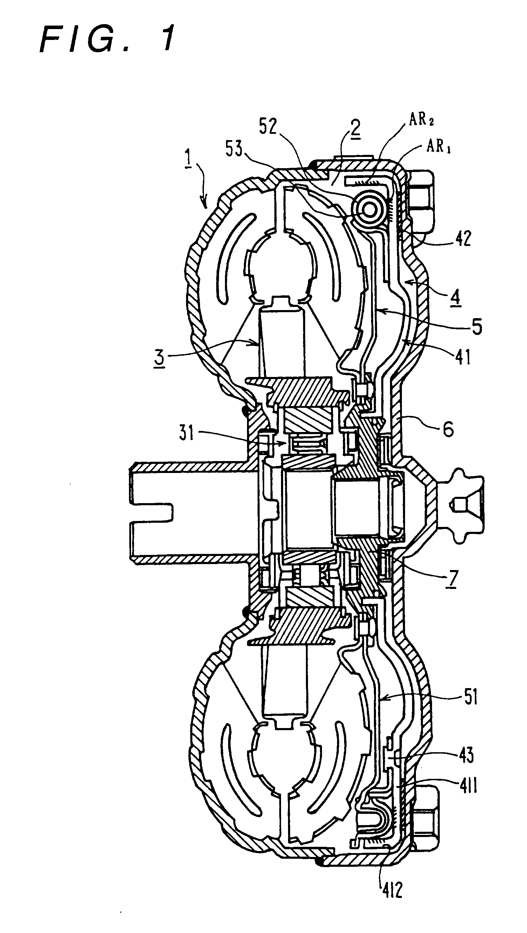

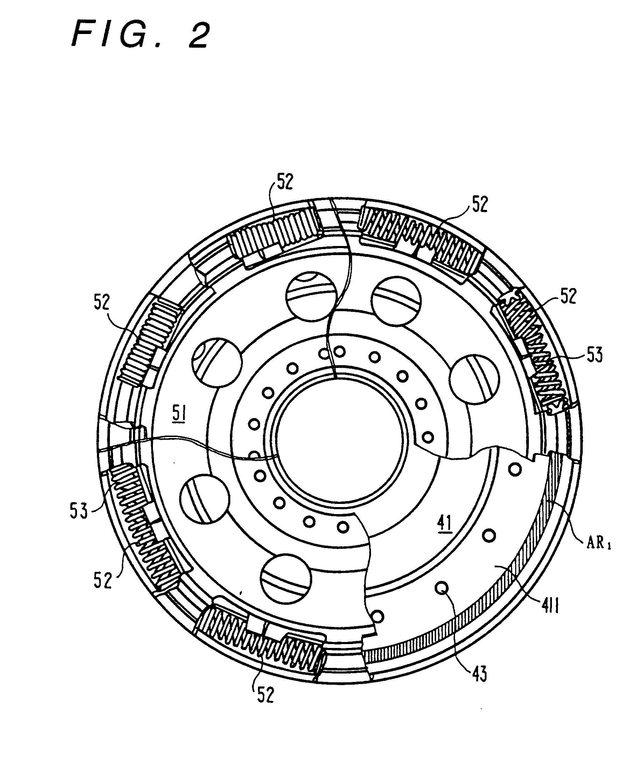

As automobile performance has been significantly improved these days, torque converters forming a power transmission system of an automobile are also improved in various fashions. A torque converter shown in Fig. 1 (vertical cross section) and Fig. 2 (plan view partially broken away of the essential portion) is also one of proposed mechanisms to obtain smoother power transmission than the conventional mechanism and to further improve mileage thereof. The torque converter is constituted of a pump impeller 1, a turbine runner 2 forming a torus with the pump impeller 1, a stator 3, a lockup clutch assembly 4, and a damper device 5.

With the torque converter, the engine rotation transmitted through a crankshaft, not shown, is transmitted to a front cover 6 and then to the pump impeller 1 fixed to the front cover 6. If the pump impeller 1 rotates, an oil in the torus rotates around an axis and circulates, in aid of centrifugal force, among the pump impeller 1, the turbine runner 2, and the stator 3. By operation of, such as, the stator 3, at the radially inner side of which a one-way clutch 31 rotatable only in a fixed direction is attached, disposed between the pump impeller 1 and the turbine runner 2, when the pump impeller 1 just starts rotating and has a large rotational speed difference from the turbine runner 2, or in a case such that the vehicle starts driving, the torque converter works as a torque converting mechanism to amplify the torque. On the other hand, when the rotational speed difference between the turbine runner 2 and the pump impeller 1 is made smaller as the rotational speed of the turbine runner 2 is increased, the torque converter works simply as a fluid coupling.

The torque converter is formed with the lockup clutch assembly 4 as described above for, such as, a mileage improvement. That is, if the vehicle reaches a predetermined speed after starting driving, the lockup clutch piston 41 installed in the lockup clutch assembly 4 is traveled in the axial direction by operation in response to switching hydraulic supply by a lockup relay valve or valves to engage with the front cover 6 through a friction member 42. The engine rotation is transmitted to the input shaft of the transmission without passing through the torque converter, thereby improving the mileage.

The damper device 5 attached to the torque converter is to absorb changes of transmission torque occurring when the lockup clutch piston 41 and the front cover 6 are engaged and disengaged. The damper device 5 is secured to the lockup clutch piston 41 by a rivet 43 whose head is hammered, and is formed with a driven plate 51. which is rotated unitedly with the turbine runner 2, and with springs 52, 53, and the like.

The springs 52 are for a first stage and arranged at eight positions in a circumferential direction of the lockup clutch piston 41; the springs 53 are for a second stage and arranged at four positions in the circumferential direction of the lockup clutch piston 41; the springs 53 are placed inside every other spring 52. The spring 53 has a smaller diameter and is shorter than the spring 52; a helix angle of the spring 52 represents a predetermined set value of the spring 53; the spring 53 starts to be flexible after the transmission torque reaches the value of the bending point torque. Although the rotation transmitted from the front cover 6 through the friction member 42 is transmitted to a turbine hub 7 through the damper device 5, the springs 52, 53 are contracted at that time, thereby absorbing changes of the transmission torque when rotation is transmitted. The springs 52, 53 can also prevent vibration and noise from occurring due to transmission of a sudden change of the output torque of the engine to the transmission mechanism not shown.

With such a torque converter described above, since the springs 52 are contracted when the lockup clutch piston 41 rotates in a normal direction (when the lockup clutch piston 41 rotates in the counterclockwise direction in Fig. 2 while the lockup clutch assembly 4 is in the engagement state) and in a reverse direction (when the lockup clutch piston 41 rotates the clockwise direction in Fig. 2 in a case when the engine brake is applied or the like), the springs 52 tend to slide repetitively on flat portions 411 of the lockup clutch piston 41. Therefore, there raises a problem that the flat portions 411 of the lockup clutch piston 41 are worn due to slides with the springs 52. In accordance with the rotation of the lockup clutch piston 41, the spring 52 receives centrifugal force and is pushed onto a riser portion 412 of the lockup clutch piston 41. During the normal and reverse rotations of the lockup clutch piston 41, the riser portion 412 of the lockup clutch piston 41 also slides on the springs 52 repetitively, and is worn as a matter of course.

Generally, as one approach to prevent such wearing caused by sliding actions between different members, hard or rigid materials may constitute members. It however tends to be difficult for such hard materials to be molded or fabricated. In particular, such hard steel materials cannot be practically employed to form the lockup clutch piston 41, on which plastic working such as pressing molding, riveting or the like is implemented. Therefore, a steel member thus constituted is given resistance against wearing by hardening and solidifying only the surface layer of the steel member.

Surface hardening methods such as a high frequency hardening, an electron beam (EB) hardening, and a laser hardening have previously been known. With these methods, the surface of the processed material is heated with high frequency or is radiated or heated by high density energy beam. After the heating is stopped when the surface layer of the material reaches a hardening temperature (austenitic temperature), austenite formed at the surface layer is transformed to martensite by rapid cooling by means of self-cooling to form a hard layer.

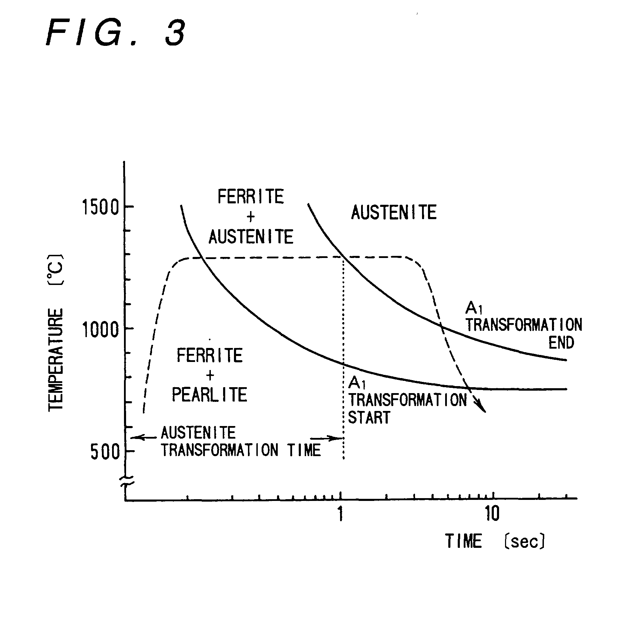

With the conventional surface hardening methods described above, however, to obtain uniform austenite by surface-heating to implement hardening, the surface layer of the material has to be kept at the hardening temperature for the austenitic transformation time (austenitic transformation completion time) set corresponding to the hardening temperature. Fig. 3 is a diagram of a T-T-A curve of carbon steel; regarding the surface hardening as far described (electron beam hardening or the like), it was a key point to harden the surface after waiting from starting heating to the completion of perfect transformation from ferrite-pearlite organization to austenite as shown by a broken line in the drawing.

Consequently, when the processed material is, for example, a thin plate part, there raise problems such that the temperature is increased in a wide range of the processed material because of the thermal conductance or transfer of the material during the austenitic transformation period, thereby deforming the material as to lose its accuracy due to thermal stress, and thereby hardening the material defectively due to insufficient self-cooling.

GB-A-1 404 865; Härterei Technische Mitteilungen, vol. 27, no. 2, 1972, pages 85-91 and Thin Solid Films, vol.84, no. 4, October 1981, pages 341-346 disclose a surface hardening processing method for a steel member by melting a surface portion of the steel member by radiation of a high density energy beam and rapidly cooling the melted surface portion.

It is an object of the invention to provide a surface processing method for a steel member preventing the processed material , even if a thin plate part, from deforming in losing accuracy and from sustaining defective hardening, and being capable of stably hardening a desired surface portion with high processing efficiency.

It is another object of the invention to provide a surface processed steel member made to have an excellent function in use of such a surface processing method.

These objects are achieved with the method of claim 1 and the steel member of claim 7.

A surface processing method for a steel member according to the invention is largely characterized in steps of rendering the processed portion of the steel member in a state that only surface is melted by a high density energy beam radiation and being capable of, by conducting subsequently a rapid cooling of the melted portion, providing a steel member having a highly hard surface portion with an excellent resistance against wearing while maintaining a good plastic workability and formation accuracy as a steel member.

It is desirable, in accordance with a preferred embodiment of the invention, that if the melting portion of the surface layer is formed of a fully melting layer and a semi-melting, or imperfectly melting layer adjacent thereto, defective smoothness in a corrugated form that might occur at the melted and solidified portion can be suppressed. If the surface of the processed portion is melted for a time shorter than the austenitic transformation completion time where it is held at the temperature for making austenite, the self-cooling effect is improved, and the depth of hardened layer can be more reduced. If the energy beam to be radiated is divided to radiate plural regions, and if surface layers of the processed portions of the plural regions are made into the melting state at the same time, processing cycle time can further be shortened since processing of plural regions can be implemented at one manipulation. Since the temperature does not increase in a wide range of the lockup clutch piston due to heat transfer, the respective thermally treated regions can be kept away from interfering with each other, and annealing or tempering or the like would not occur. Although the manipulation is simple because rapid cooling of the melted portion is accomplished only by conducting a natural cooling, a compulsive cooling such as the water cooling may as a matter of course be applicable. If the thermal capacity of the entire steel member is set four times or more of the thermal capacity of the processed portion, it is desirable since in any case the rapid cooling effect becomes more certain. The rapid cooling effect, by such a design, would be more guaranteed as heat is fast transferred from the melted portion to the mother portion. It is also possible to stably process against a thin thickness steel member. Accordingly, the surface processed steel member according to the invention is suitable for use of thin thickness parts or the like that requires portions for resistance against wearing locally (for example, only at a surface layer or a part of the surface layer) and that seeks good plastic workability at the other portions. Such an effect is more outstanding where the natural cooling is employed. It is to be noted that when the thickness of the steel member is uniform, if the thickness of the steel member is set four times or more of the depth of the melted portion, substantially the same effect as the limitation on the thermal capacity above can be obtained.

A surface processed steel member in another aspect of the invention is largely characterized in a point to enable the member to have a highly hard surface portion with a good plastic workability and excellent resistance against wearing by means that the surface processed steel member is constituted so as to locally have a surface layer in which mother metal is melted and solidified by rapid cooling, since hardening solidification is not made at portions except the melted hardened surface portion. To make harder the melted and solidified processed portion and to make thinner the surface processed steel member itself, it is advantageous that the thermal capacity thereof is set a quarter of or less than the thermal capacity of the entire member or that the depth thereof is set a quarter of or less than the thickness of the member where mother metal is melted and solidified by rapid cooling. It is to be noted that with the surface processed steel member, the performance thereof becomes more outstanding when the melted and solidified surface layer is provided for use as a resistance face against wearing.

Although the invention regarding the surface processing method for the steel member is, as described above, characterized in rendering a processed portion of the steel member in a state that only the surface of the portion is melted by radiation of the high density energy beam and subsequently rapidly cooling the melted portion (hereinafter referred as to "melting-hardening"), the surface portion of the steel member is made locally in a melting state in an extremely shallow range in a short period (almost in a moment) upon radiation of the high density energy beam such as an electron beam (EB) or a laser beam onto the surface of the steel member.

If the position to which the high energy beam is radiated is shifted in this situation, heat transfers with fast speed to the mother material because the heated and melted layer is extremely thin, so that the melted layer is rapidly cooled and solidified in a moment without compulsive cooling and further to be rapidly cooled down to a low temperature range. The inventors here report that they confirmed a fact that the solidified layer (including partially an extremely thin thermally affected portion located as a lower layer thereof) is transformed to be uniform austenitic organization in a moment at the same time of solidification of the melted layer. However, this austenitic organization emerges in a very moment only, and the austenitic organization is transformed quickly to be a hardened organization (martensitic organization) due to the rapid self-cooling described above. Therefore, the portion at which the surface of the steel member is rapidly melted and rapidly cooled becomes very hard and is given excellent resistance against wearing.

According to the melting hardening method regarding this invention, inconvenience like in the conventional method never occurs because austenitic transformation of the surface of the processed portion is completed in a moment by melting and solidification of the surface which is also done in a moment and because the surface is hardened as it is in a moment. That is, with this invention, not only the processing time can be shortened but also making austenitic transformation of the surface layer can be accomplished in a short time (instantly), thereby reducing transferring heat to the periphery of the processed portion to suppress the increment of temperature at the portion, and thereby preventing the processed member from losing its formation accuracy and lowering the self-cooling ability due to accumulation of heat. Since the melted and solidified portion is cooled in a short period (or instantly) at a martensitic transformation starting temperature or below by self-cooling or the like. reduction of the hardened and solidified layer depth and prevention of defective hardening due to formation of bainite can be done. Accordingly, a proper process can be conducted for a thin thickness member, and a steel member having a surface portion with high hardness and excellent resistance against wearing in maintaining good plastic workability and formation accuracy at portions except the processed portion, can be obtained. The surface layer of the processed portion of the steel member is melted once and then re-solidified, so that the surface roughness of the portion can also be improved (made smoother) by effects of gravity force, surface tension or the like.

Where the melting hardening method according to the invention is conducted. when the locally melted layer to be formed at the surface layer of the steel member is controlled to be in a state constituted of a fully melted layer and an imperfectly melted layer located adjacently therebelow by adjustment or the like of radiation condition of the high density energy beam (such as lowering output or extending the radiation period more or less), defective smoothness in a corrugated form that may tend to occur, though it is assumed that the portion of the imperfectly melted layer serves as a buffer material to absorb stress during low temperature transformation (martensitic transformation), at the surface of the processed portion (melted and solidified portion) upon cooling at that state by the self-cooling or the like, is stably prevented. The defective smoothness in a corrugated form nonetheless may become better by reducing the depth of the hardened and solidified layer. It is to be noted that the semi-melted layer can be confirmed by an observation of a cross section of the melting hardening member in the post-process stage.

The melting of the surface portion of the steel member conducted by heating from the radiation of the high density energy beam is executed by heating in a time shorter than the austenitic transformation completion time where it is held at the temperature for making austenite (a temperature immediately below the melting temperature). Such a short time heating within the "austenitic transformation completion time" can sufficiently melt the surface portion, and a hardening process can be implemented without waiting the austenitic transformation completion time as of a general thermal process, because a uniform austenitic organization can be accomplished instantly by solidifying the melting body. As a result, the shortened heating period allows the process to be effectuated and also brings a result avoiding the inconvenience described above caused by the thermal accumulation occurring due to a long time heating.

The above and other objects and features of the invention are apparent to those skilled in the art from the following preferred embodiments thereof when considered in conjunction with the accompanied drawings, in which:
Fig. 1 is a vertical cross section of a torque converter having processed portions to which a surface processing method according to the invention applies;
Fig. 2 is a plan view partially taken away showing the essential of the torque converter in Fig. 1;
Fig. 3 is a diagram for T-T-A curve of carbon steel;
Fig. 4 is a diagram illustrating a melting-hardening apparatus to be used for the surface processing method according to the invention;
Fig. 5 is an equilibrium state diagram of a steel and carbon system.
Fig. 6 is a metal organization photograph taken to show a cross section of the steel member subject to a melting-hardening process;
Fig. 7 is a graph showing a hardness profile at the cross section of a steel member subject to the melting-hardening process;
Fig. 8 is a diagram for T-T-T curve of carbon steel;
Fig. 9 is a graph indicating surface roughness (Rz) in comparing between a portion subject to the melting-hardening process and a portion not subject to the melting-hardening process;
Fig. 10 is an illustration showing processed regions of a lockup clutch piston;
Fig. 11 is an illustration showing a state of radiation of the electron beam in parallel to two processed regions;
Fig. 12 is a diagram showing a radiation trace of the electron beam;
Fig. 13 is a waveform diagram showing a signal to deflect the electron beam for radiation in Fig. 12;
Fig. 14 is another diagram showing another radiation trace of the electron beam;
   and
Fig. 15 is another waveform diagram showing a signal to deflect the electron beam for radiation in Fig. 14.

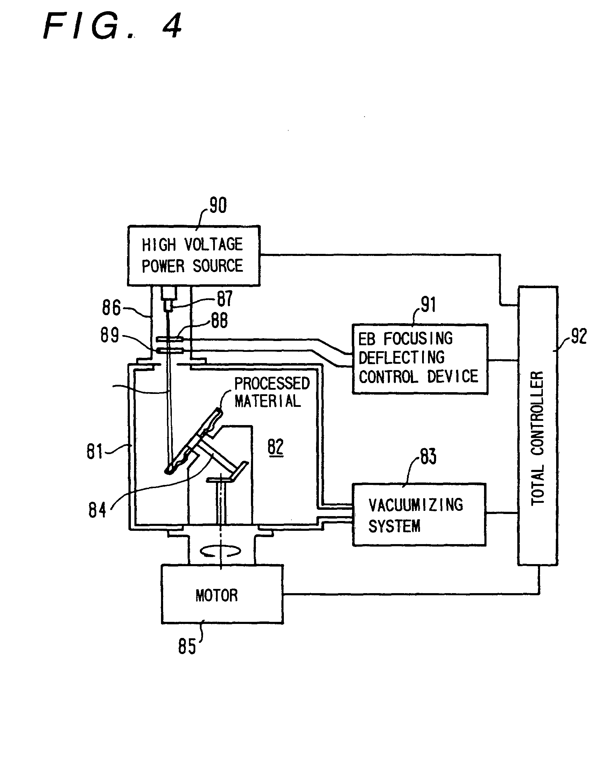

Referring to Fig. 4, a surface processing method according to a preferred embodiment in use of a melting-hardening apparatus is described. This detailed description is based on an example in which a melting-hardening process is implemented by an electron beam radiation to flat portions 411 of a lockup clutch piston 41 and faces of riser portions 412 in opposition to springs 52 (that is, annular processed regions AR₁ and AR₂ shown in the drawing) as constitutional members for a torque converter shown in Figs. 1, 2 described above.

In the melting-hardening apparatus, the numeral 81 represents a vacuum working chamber casing having a sealing structure; the numeral 82 represents a vacuum working chamber surrounded by the vacuum working chamber casing 81; the numeral 83 is a vacuumizing system for forming vacuum in the vacuum working chamber 82. In the vacuum working chamber 82, a processed material supporting shaft 84 is provided rotatably around the center of the shaft and rotated by a motor 85 formed outside the vacuum working chamber casing 81. A beam pipe 86 is connected to the vacuum working chamber casing 81. An electron beam gun 87 is attached to one end of the beam pipe 86. A focusing lens 88 is formed on a downstream side of the electron beam gun 87 for focusing electron beam BM generated at the electron beam gun 87. A deflection lens 89 is formed on a downstream side of the focusing lens 88 for changing or scanning a point to be radiated by deflecting the electron beam BM.

A high voltage power source 90 is connected to the electron beam gun 87; the focusing lens 88 and the deflecting lens 89 are connected to an EB focusing deflecting control device 91; a total controller 92 is provided to be able to control the vacuumizing system 83, the motor 85, the high voltage power source 90, and the EB focusing deflecting control device 91.

Using the melting-hardening apparatus, processed regions AR₁ or AR₂ (see, Figs. 1, 2) as a part of a lockup clutch piston material made of molded low carbon steel (S22C) as mother metal, are easily melted and hardened. The melting-hardening process is completed by a method of supporting the lockup clutch piston material to be on and coaxially with the processed material supporting shaft 84 in the melting-hardening apparatus and of then radiating electron beam BM (output: 4.6 kW) onto the processed regions AR₁ or AR₂ in rotating the material around the central shaft. The rotational traveling speed of the processed regions is adjusted or controlled, for example, at 16.7 m/min.

Although when the electron beam is radiated to the processed portions of the lockup clutch piston material the surfaces of the portions are heated at a melting temperature of 1500 °C or above and melted, the portion radiated with the electron beam is moved continuously to an adjacent portion in a circumferential direction as the lockup clutch piston material rotates. The heat of the surface melting portion is quickly (almost instantly) taken away to a main portion, or the mother metal portion, to solidify the surface of the melting portion (at that time, the melted and solidified portion becomes austenitic organization), which is further hardened by self-cooling.

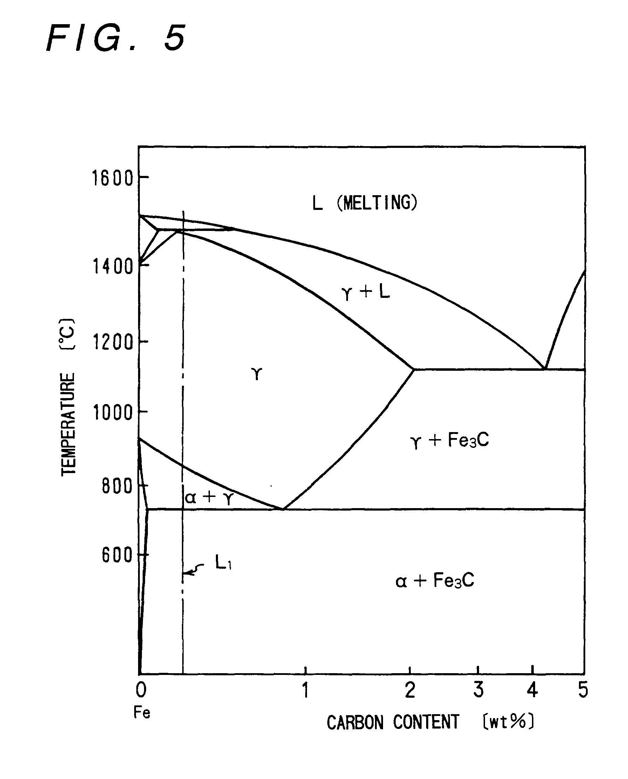

Fig. 5 shows an equilibrium state diagram of iron-carbon system showing changes, by one dot chain line L1, of the organization of the processed portions under this process. First, a normal temperature organization (ferrite-pearlite) is heated and melted by radiation of the electron beam to make a melting body L, which is then solidified by self-cooling to form austenite. Immediately after austenite is formed, the body is rapidly cooled further by self-cooling to conduct hardening, thereby forming martensite as a low temperature transformation organization. Accordingly, since the surface of the processed portion can be made harder, the resistance against wearing will be improved.

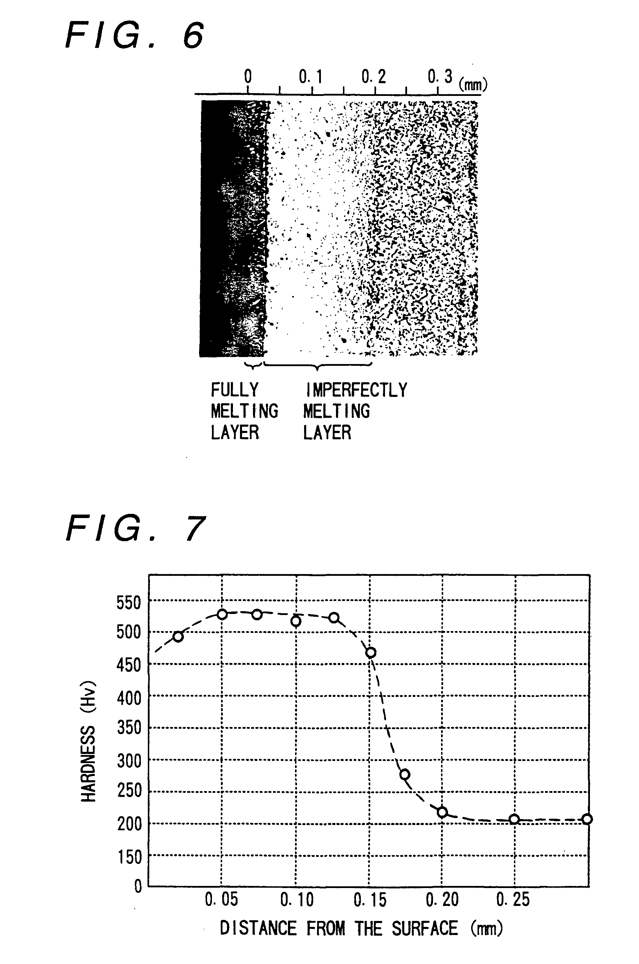

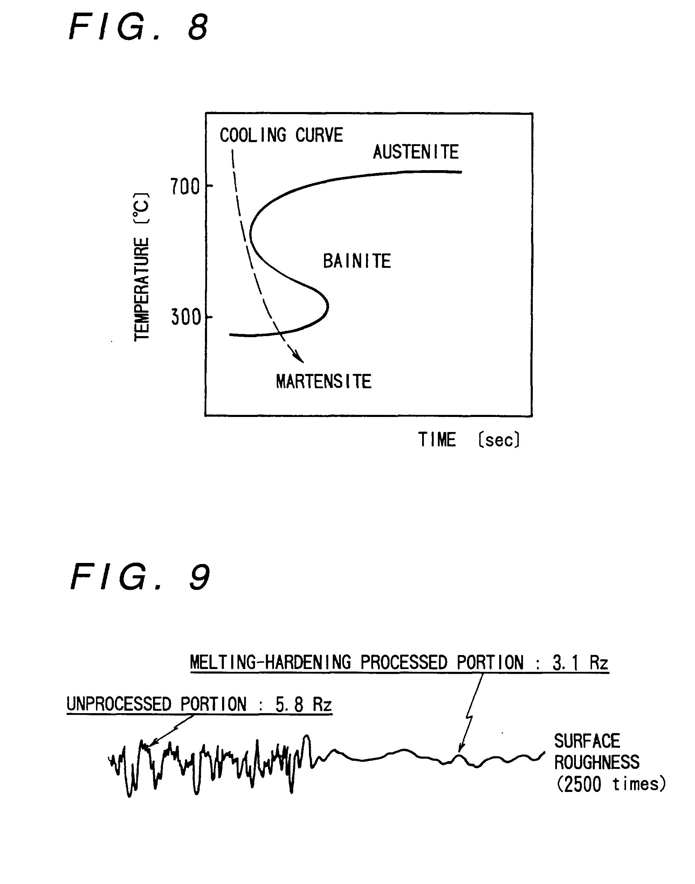

Fig. 6 indicates an organization at a cross section of the melted and hardened material thus obtained; Fig. 7 illustrates by the graph measured results of a hardness profile regarding the cross section. As apparent from these results, with the melting-hardening method according to the invention, the hardened surface is surely made very hard and smooth and indicates a sufficient resistance against wearing, even though very shallow. From Fig. 6, it can be also confirmed that the fully melted layer and the imperfectly melted layer in which the melted portion adjacent to the fully melted layer and the heated portion not melted are mingled are obtained.

As already described and as well as apparent from the T-T-A curve diagram of Fig. 3, when a normal electron beam is radiated to harden the surface on the processed portions so not to melt the processed portions, though the austenitic transformation time required for transforming the organization of the processed portion to austenite is made shorter as the heating temperature is made higher, a considerable time is still required to complete the austenitic transformation. However, when the melting-hardening process according to the invention is implemented, the organization of the processed portion can be transformed to austenite in a moment only by heating the portion in a short time (instantly) at the melting temperature of 1500 °C or above and by melting and cooling the processed portion, as well as the processed portion is hardened subsequently and immediately by the self-cooling. Even though the same results may be obtained by any of hardening subsequent to melting of about 0.05 second from heating, or melting of about 0.5 second, or hardening after holding the portion in a melting state for a fixed amount of time after melting (for example, about 1 second after heating), it is advantageous to melt the portion for a bit of time within 0.05 second and to harden the portion in consideration of some factors such as processing efficiency and adverse influence due to thermal conductance. That is, the short time process can suppress increment of the temperature around the processed portions through thermal conductance. Accordingly the thermally accumulated amount in the processed member is reduced that much, thereby improving the self-cooling effect, and thereby preventing impairments such as occurrence of thermal stress.

Accordingly, when the normal electron beam is radiated to harden the surface. it is impossible to conduct the process unless the thermal capacity of the whole lockup clutch piston material is set eight times or more of the thermal capacity of the processed portion (in other words, unless the thickness of the member is made thicker), whereas in the case of this particular invention method, processing is possible even if the thermal capacity of the entire member is small, and as a result, the lockup clutch piston material can have a thinner thickness. For example, even a processed material having about a half of the thickness limitation under the normal electron beam, can be treated readily in accordance with this invention method.

Since the processed portion of the lockup clutch piston material can be processed in a very short time (consequently, the time to cool it at the starting temperature of the martensitic transformation), as apparent from the T-T-T curve diagram of carbon steel indicated as Fig. 8, an organization such bainite is never formed at the processed portion, and therefore, any defective hardening is obviated. In addition, the solidified portion processed according to the invention method has a significantly improved surface roughness since the surface layer is solidified after once melted. That is, Fig. 9 is a graph comparing surface roughness (Rz) between the processed portion of the lockup clutch piston material processed according to the invention method and a non-processed portion. As apparent from Fig. 9, the surface roughness at the portion processed according to the invention method is obviously improved and made smoother.

As described above, the lockup clutch piston material processed according to the invention method is given an excellent resistance against wearing since the desired portion becomes highly hard, and the portions except the solidified portion do not become so hard, so that various plastic works, for example, plastic rivets (a boss in a united body of casing whose head is hammered, a Tox rivet (trademark), or the like) can be implemented against such portions. During the process, since the temperature is not increased in a wide range of the member, deformation losing accuracy does not occur (for example, since deformation losing accuracy does not occur at a surface of the front cover side of the lockup clutch piston when assembled in a torque converter, flatness of a surface to which a friction member is attached is guaranteed), so that the lockup clutch device can be engaged smoothly.

In the melting-hardening apparatus shown in Fig. 4, the electron beam BM generated at the electron beam gun 87 is deflected by the deflection lens 89, and the radiated portion can be changed as desired, so that plural regions can be subject to melting-hardening process in parallel at the same time.

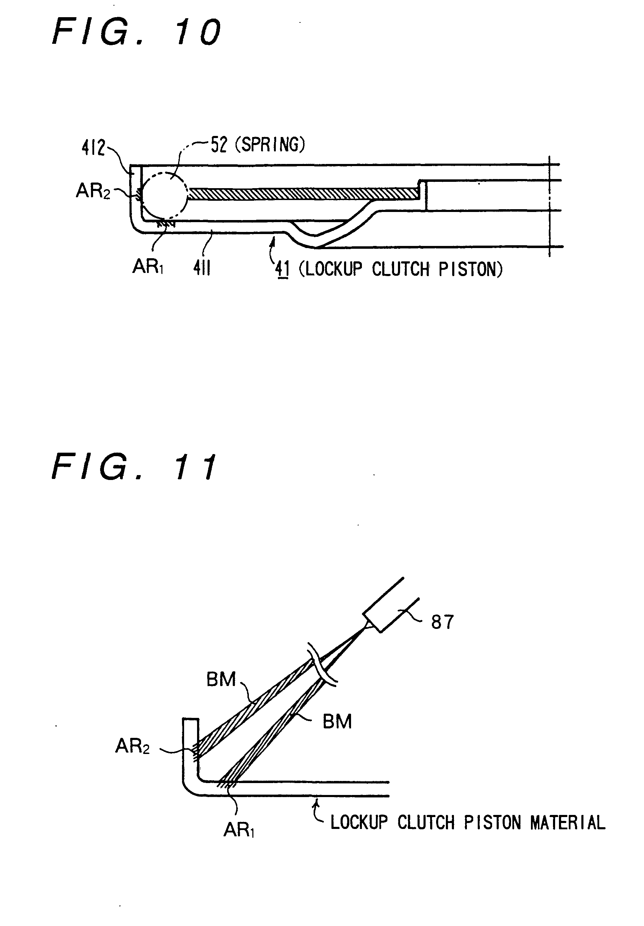

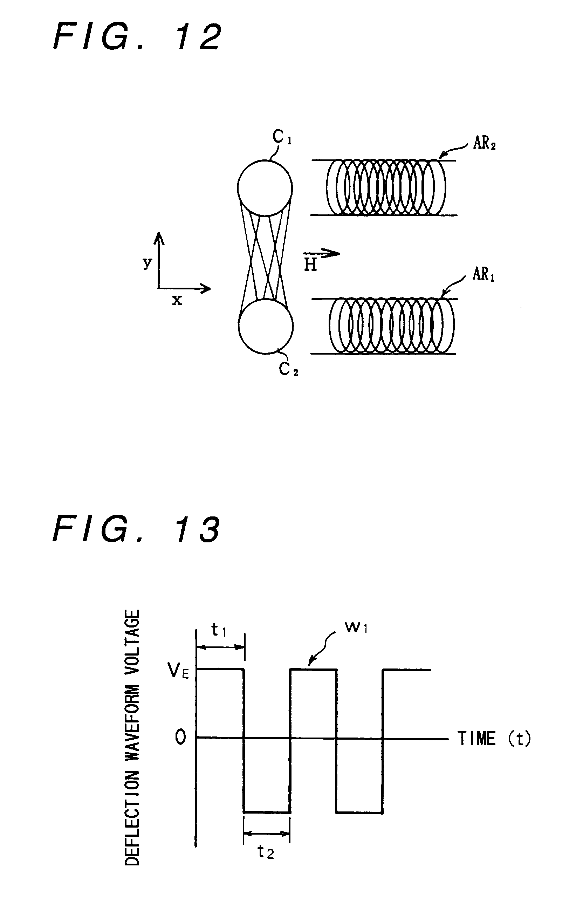

Fig. 10 illustrates two surface processed regions of the lockup clutch piston 41; both of surface processed regions (processed regions) AR₁, AR₂ set on a flat plate 411 and a riser portion 412 of the lockup clutch piston 41 extend around the entire circumference of the lockup clutch piston 41. To process the two processed regions at the same time in parallel by melting and hardening, the electron beam BM may be deflected as shown in Fig. 11. That is, Fig. 11 shows a radiation state of the electron beam when the two processed regions are processed at the same time in parallel. The electron beam BM from the electron beam gun 87 is deflected by the deflection lens not shown and radiated to the processed regions AR₁, AR₂ alternatively. The processed regions AR₁, AR₂ are melted and hardened at the same time in parallel by such a method.

An example of a radiated portion trace of the electron beam BM at that time is shown in Fig. 12. According to the example shown in Fig. 12, the electron beam BM is radiated along two circular deflected traces C₁, C₂. The thermally treated or processed regions AR₁, AR₂ are radiated with the electron beam BM through the circular deflected traces C₁, C₂, respectively, and during this radiation, the lockup clutch piston material as the processed material is rotated around its central shaft. The traces of the electron beam BM therefore travel in Arrow H direction in the processed regions AR₁, AR₂. The respective circular deflected traces C₁, C₂ are formed by combinations of deflections where sinusoidal deflection waveforms in x-axial and y-axial directions are generated. To radiate the electron beam BM alternatively on the processed regions AR₁. AR₂ by switching the circular deflected traces C₁, C₂, a deflection waveform W₁ as shown in Fig. 13 is generated and superimposed on the deflection waveforms in y-axial direction. Therefore, the electron beam BM is radiated on the thermally treated, or processed, region AR₁ during time t₁ that the voltage V_{E} is a plus value and on the thermally treated, or processed, region AR₂ during time t₂ that the voltage V_{E} is a minus value.

In this case, as described above, since the temperature does not increase in a wide range of the lockup clutch piston material due to heat conductance, there is no thermal interference between the processed regions AR₁, AR₂, and therefore, unwanted tempering, annealing and the like is obviated. Furthermore, the plurality of the processed regions AR₁, AR₂ is melted and hardened at the same time, so that thermal treating time can be reduced.

While the riser portion 412 of the lockup clutch piston needs high wearing resistance because of exertion of centrifugal force of the springs 52, the flat plate portion 411, contrarily, does not need high wearing resistance as much as that of the riser portion 412 of the lockup clutch piston because of no exertion of centrifugal force of the springs 52. By setting the time t₁ of the deflection waveform w₁ shorter and the time t₂ of the deflection waveform w₂ longer, the thermally treated region AR₁ can be made softer than the thermally treated region AR₂. The energy consumption for melting-hardening can be reduced, as well as the working time can be reduced.

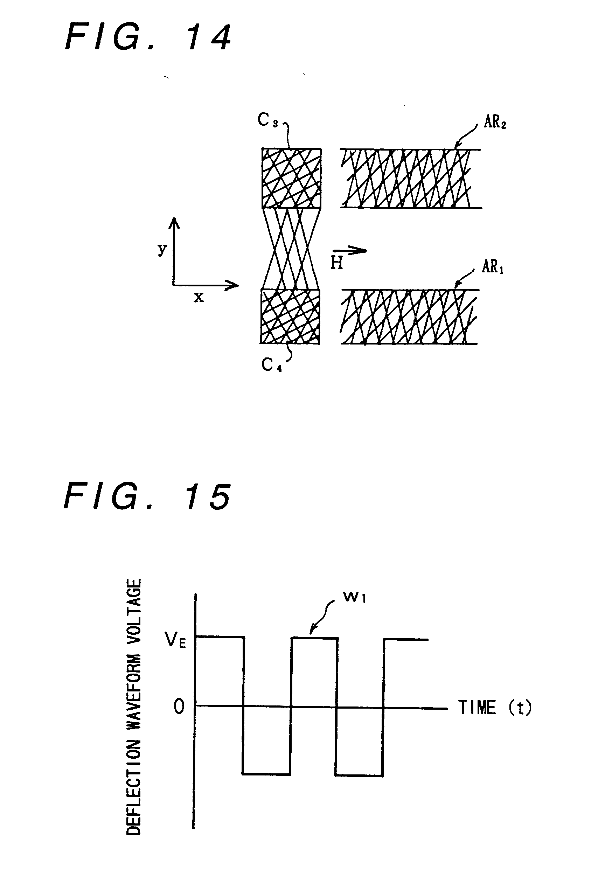

Fig. 14 shows another example of a radiated portion trace of the electron beam BM to conduct melting-hardening on the processed regions AR₁, AR₂ at the same time in parallel. The electron beam BM is radiated along two facial deflected traces C₃, C₄. That is, the processed regions AR₁, AR₂ are radiated with the electron beam BM along the facial deflected traces C₃, C₄, respectively, and during this, the lockup clutch piston material as the processed material is rotated around the central shaft. The traces of the electron beam BM therefore travel in Arrow H direction in the processed regions AR₁, AR₂.

The respective facial deflected traces C₃, C₄ are formed by generating serrate deflection waveforms in x-axial and y-axial directions. To radiate the electron beam BM alternatively on the processed regions AR₁, AR₂ by switching the facial deflected traces C₁, C₂, a deflection waveform W₁ as shown in Fig. 15 is superimposed on the serrate wave in x-axial and y-axial directions. The circular deflection and facial deflection can be combined, and furthermore, the beam can be deflected so as to trace a line, an ellipse, or the like.

Although in this embodiment an example that a lockup clutch piston material of a torque converter is to be processed is described, the invention can apply, as a matter of course, anything as far as a steel member whose surface layer is required to be solidified entirely or partially, such as plate slide portions in a multi-plate friction engagement device, couplers composed of members or snap rings, an oil pump plate, and a seal ring.

The foregoing description of a preferred embodiment of the invention has been presented for purposes of illustration and description, and is not intended to be exhaustive or to limit the invention to the precise form disclosed.

## Claims

1. A surface processing method for a steel member by radiation of a high density energy beam
characterized in comprising the steps of:
melting only a surface of a processed portion located as a part of the steel member by radiation of a high density energy beam for a time shorter than the austenitic transformation completion time where it is held at the temperature for making austenite and
subsequently rapidly cooling the melted surface of the processed portion.

2. A method as set forth in claim 1,
wherein the melted surface of the processed portion is in a state composed of a fully melted layer and an imperfectly melted layer adjacently located thereto.

3. A method as set forth in claim 1 or 2,
wherein the high density energy beam is divided to radiate a plurality of processed regions to melt the surfaces of the processed regions at the same time.

4. A method as set forth in any of claims 1 to 3,
wherein the rapid cooling is done by natural cooling.

5. A method as set forth in any of claims 1 to 4,
wherein the thermal capacity of the whole steel member is set four times or more of the thermal capacity of the processed portion.

6. A method as set forth in any of claims 1 to 5,
wherein the thickness of the whole steel member is set four time or more of the depth of the melted portion.

7. A surface processed steel member by radiation of a high density energy beam
characterized in comprising:
a main portion made of mother metal;
a processed portion located as a part of the main portion; and
a surface of the processed portion which is melted by radiation of a high density energy beam for a time shorter than the austenitic transformation completion time where it is held at the temperature for making austenite, and is subsequently solidified by rapid cooling.

8. A steel member as set forth in claim 7, wherein the
surface in which mother metal is melted and solidified by rapid cooling is set so that the thermal capacity of the surface is a quarter of the thermal capacity of the main member or less.

9. A steel member as set forth in claim 7 or 8, wherein the
surface in which mother metal is melted and solidified by rapid cooling is set so that the depth of the surface is a quarter of the thickness of the main member or less.

10. A steel member as set forth in claim 7, 8 or 9, wherein the
melted and solidified surface is used as a friction resisting surface.

## Patentansprüche

1. Verfahren zur Oberflächenbehandlung eines Bauteils aus Stahl durch Bestrahlung mit einem hochdichten Energiestrahl,
**gekennzeichnet durch** die Schritte:
Schmelzen nur einer Oberfläche eines zu behandelnden Abschnitts, der als Teil eines Bauteils aus Stahl angeordnet ist, durch Bestrahlung mit einem hochdichten Energiestrahl für eine Zeit, die kürzer ist als die Austenitumwandlungsvollendungszeit, wo sie auf der Temperatur zur Ausbildung von Austenit gehalten wird, und
nachfolgendes schnelles Abkühlen der geschmolzenen Oberfläche des zu behandelnden Abschnittes.

2. Verfahren nach Anspruch 1,
wobei die geschmolzene Oberfläche des zu behandelnden Abschnittes in einem Zustand ist, der aus einer vollständig geschmolzenen Schicht und einer daran angrenzenden, unvollständig geschmolzenen Schicht besteht.

3. Verfahren nach Anspruch 1 oder 2,
wobei der hochdichte Energiestrahl geteilt ist, um mehrere zu behandelnde Bereiche zu bestrahlen, um die Oberflächen der zu behandelnden Bereiche gleichzeitig zu schmelzen.

4. Verfahren nach einem der Ansprüche 1 bis 3,
wobei die schnelle Abkühlung durch natürliche Abkühlung erfolgt.

5. Verfahren nach einem der Ansprüche 1 bis 4,
wobei die Wärmekapazität des gesamten Bauteils aus Stahl auf das Vierfache oder mehr der Wärmekapazität des zu behandelnden Abschnitts festgelegt ist.

6. Verfahren nach einem der Ansprüche 1 bis 5,
wobei die Dicke des gesamten Bauteils aus Stahl auf das Vierfache oder mehr der Tiefe des geschmolzenen Abschnittes festgelegt ist.

7. Oberflächenbehandeltes Bauteil aus Stahl hergestellt durch Bestrahlung mit einem hochdichten Energiestrahl,
**gekennzeichnet durch**:
einen Hauptabschnitt, der aus einem Muttermetall besteht;
einen behandelten Abschnitt, der als Teil des Hauptabschnitts angeordnet ist; und
eine Oberfläche des behandelten Abschnitts, die durch Bestrahlung mit einem hochdichten Energiestrahl für eine Zeit geschmolzen worden ist, die kürzer ist als die Austenitumwandlungsvollendungszeit, wo sie auf der Austenitumwandlungstemperatur zur Ausbildung von Austenit gehalten worden ist, und anschließend durch schnelle Abkühlung verfestigt worden ist.

8. Bauteil aus Stahl nach Anspruch 7,
wobei die Oberfläche, in der Muttermetall geschmolzen und durch schnelle Abkühlung verfestigt worden ist, so eingestellt ist, daß die Wärmekapazität der Oberfläche ein Viertel der Wärmekapazität des Hauptbauteils oder weniger ist.

9. Bauteil aus Stahl nach Anspruch 7 oder 8,
wobei die Oberfläche, in der Muttermetall geschmolzen und durch schnelle Abkühlung verfestigt worden ist, so eingestellt ist, daß die Tiefe der Oberfläche ein Viertel der Dicke des Hauptbauteils oder weniger ist.

10. Bauteil aus Stahl nach Anspruch 7, 8 oder 9,
wobei die geschmolzene und verfestigte Oberfläche als reibungsbeständige Oberfläche verwendet wird.

## Revendications

1. Procédé de traitement de surface pour un élément en acier par irradiation à l'aide d'un faisceau d'énergie de haute densité
**caractérisé en ce qu'**il comprend les étapes consistant à :
faire fondre uniquement une surface d'une partie traitée faisant partie de l'élément en acier par irradiation à l'aide d'un faisceau d'énergie de haute densité pendant un temps plus court que le temps d'exécution de la transformation austénitique pendant lequel elle est maintenue à la température de formation d'austénite et
refroidir ensuite rapidement la surface fondue de la partie traitée.

2. Procédé selon la revendication 1,
dans lequel la surface fondue de la partie traitée est dans un état comprenant une couche entièrement fondue et une couche imparfaitement fondue qui lui est adjacente.

3. Procédé selon la revendication 1 ou la revendication 2,
dans lequel le faisceau d'énergie de haute densité est divisé de façon à irradier une pluralité de régions traitées pour faire fondre les surfaces des régions traitées de façon simultanée.

4. Procédé selon l'une quelconque des revendications 1 à 3,
dans lequel le refroidissement rapide est effectué par refroidissement naturel.

5. Procédé selon l'une quelconque des revendications 1 à 4,
dans lequel la capacité thermique de l'ensemble de l'élément en acier est choisie de façon à être au moins quatre fois supérieure à la capacité thermique de la partie traitée.

6. Procédé selon l'une quelconque des revendications 1 à 5,
dans lequel l'épaisseur de l'ensemble de l'élément en acier est choisie de façon à être au moins quatre fois supérieure à la profondeur de la partie fondue.

7. Elément en acier traité en surface par irradiation à l'aide d'un faisceau d'énergie de haute densité,
**caractérisé en ce qu'**il comprend :
une partie principale constituée par un métal-mère ;
une partie traitée faisant partie de la partie principale ; et
une surface de la partie traitée qui est fondue par irradiation à l'aide d'un faisceau d'énergie de haute densité pendant un temps plus court que le temps d'exécution de la transformation austénitique pendant lequel elle est maintenue à la température de formation d'austénite, et qui est ensuite solidifiée par un refroidissement rapide.

8. Elément en acier selon la revendication 7, dans lequel la capacité thermique de la surface dans laquelle le métal-mère est fondu et solidifié par refroidissement rapide est choisie de façon à ce qu'elle soit égale au quart, ou à moins du quart, de la capacité thermique de l'élément principal.

9. Elément en acier selon l'une quelconque des revendications 7 et 8, dans lequel la profondeur de la surface dans laquelle le métal-mère est fondu et solidifié par refroidissement rapide est choisie de façon à ce qu'elle soit égale au quart ou à moins du quart de l'épaisseur de l'élément principal.

10. Elément en acier selon l'une quelconque des revendications 7, 8 et 9, dans lequel la surface fondue et solidifiée est utilisée comme surface résistante au frottement.
